# EUROPÄISCHE PATENTSCHRIFT

(11) **EP 2 210 798 B1**
(45) Veröffentlichungstag und Bekanntmachung des Hinweises auf die Patenterteilung: **13.07.2011**
(21) Anmeldenummer: 10000507.3
(22) Anmeldetag: 20.01.2010
(51) Int. Cl.: B62D 17/00, G01L 5/00

(54) **Verfahren zum aktiven Einstellen einer Neigung eines Rades eines Kraftwagens, insbesondere von Sturz und Spur, und entsprechende Vorrichtung**
Method for active adjustment of an angle of a wheel on a motor vehicle, in particular fall and track, and corresponding device
Procédé de réglage actif de l'inclinaison d'une roue de véhicule automobile, notamment de la chute et de la trace, et dispositif correspondant

(30) Priorität: 23.01.2009 DE 102009005889
(43) Veröffentlichungstag der Anmeldung: 28.07.2010
(73) Patentinhaber: AUDI AG, 85045 Ingolstadt (DE)
(72) Erfinder: Michel, Wilfried, 93339 Riedenburg (DE); Müller, Hugo, 86701 Rohrenfels-Ballersdorf (DE); Kossira, Christoph, 85053 Ingolstadt (DE); Meitinger, Karl-Heinz, 81667 München (DE); Schmid, Wolfgang, 85354 Freising (DE)

(56) Entgegenhaltungen:
- DE-A1-102005 012 245
- GB-A- 2 352 696
- JP-A- 3 231 016
- JP-A- 2009 132 378
- US-A1- 2002 036 385
- US-B1- 6 406 036

## Beschreibung

Die Erfindung bezieht sich auf ein Verfahren zum Einstellen einer Neigung eines Rades eines Kraftwagens um wenigstens eine Achse mithilfe einer Einstellvorrichtung. Die Erfindung betrifft außerdem eine entsprechende Vorrichtung, welche zum Einstellen der Neigung des Rades dient. Schließlich betrifft die Erfindung einen Kraftwagen mit einer solchen Vorrichtung.

Vorliegend gilt das Interesse insbesondere dem aktiven Verstellen des Spurwinkels sowie des Sturzwinkels eines Rades eines Kraftwagens während der Fahrt. Der Verlauf des Spur- und des Sturzwinkels des Rades bei dessen Einfedern wird durch eine so genannte Raderhebungskurve wiedergegeben: Der Spur- und der Sturzwinkel werden zunächst durch die kinematische Anordnung der Lenker der Radaufhängung beim Einfedern des Rades beeinflusst. Sie werden jedoch auch durch die elastischen Verformungen der Bauteile der Radaufhängung unter Einfluss von auf das Rad wirkenden Längs- und Querkräften sowie Drehmomenten beeinflusst (auch als Elastokinematik bezeichenbar). Die Raderhebungskurven sowie die elastischen Verformungen der Bauteile beeinflussen maßgeblich das Fahrverhalten des Kraftwagens.

Es sind Verfahren aus dem Stand der Technik bekannt, bei denen der Einfederweg einzelner Räder gemessen wird. Der Einfederweg der einzelnen Räder wird mithilfe eines so genannten Höhenstandssensors gemessen. Außerdem ist es bekannt, dass der Spur- und Sturzwinkel eines Rades abhängig von dessen Einfederweg eingestellt werden. Dies ist beispielsweise aus der DE 10 2005 012 245 A1 bekannt.

Es ist außerdem Stand der Technik, die auf ein Rad eines Kraftwagens beziehungsweise die vom Rad auf die Achse wirkenden Kräfte und Drehmomente zu messen. Diese Kräfte und Drehmomente können beispielsweise in einem Radlager gemessen werden, wie es in der DE 10 2005.059 393 A1 beschrieben ist. Auch die DE 44 42 355 A1 offenbart ein Verfahren, bei welchem die vom Rad auf die Achse übertragenen Kräfte gemessen werden.

Aus der gattungsbildenden Druckschrift US 2002/0036385 A1 ist eine Radaufhängung als bekannt zu entnehmen, bei welcher der Radsturz aktiv eingestellt werden kann. Hierzu werden der Radsturzwinkel, die Querbeschleunigung, die Fahrzeuggeschwindigkeit, der Lenkwinkel, der Straßenzustand und die Gierrate bestimmt. In Abhängigkeit von diesen Größen kann der Radsturz aktiv eingestellt werden und somit die Fahrsicherheit erhöht werden.

Es ist Aufgabe der Erfindung, ein Verfahren sowie eine Vorrichtung zu schaffen, bei welchem und welcher die Neigung eines Rades eines Kraftwagens um wenigstens eine Achse im Hinblick auf die Fahrdynamik und den Fahrkomfort an die jeweils herrschenden Fahrbedingungen besonders präzise angepasst wird.

Diese Aufgabe wird erfindungsgemäß durch ein Verfahren mit den Merkmalen nach Patentanspruch 1 sowie durch eine Vorrichtung mit den Merkmalen nach Patentanspruch 8 gelöst, wie auch durch einen Kraftwagen mit den Merkmalen nach Patentanspruch 9.

Es ist somit bei dem erfindungsgemäßen Verfahren vorgesehen, dass zumindest eine auf das Rad und/oder von dem Rad auf eine Welle - mit welcher das Rad gekoppelt ist - wirkende Kraft und/oder zumindest ein auf das Rad und/oder die Welle wirkendes Drehmoment als zumindest eine Messgröße gemessen wird/werden. Die Neigung des Rades um die wenigstens eine Achse wird abhängig von der zumindest einen Messgröße eingestellt. Die Erfindung macht somit die Tatsache zunutze, dass die auf das Rad und/oder die Welle wirkende Kraft und/oder das Drehmoment ein Maß für die elastische Verformung der Bauteile einer Radaufhängung darstellt. Die Erfindung geht nun den Weg, die Neigung des Rades abhängig von der Kraft und/oder dem Drehmoment einzustellen. Dieses Einstellen der Neigung kann somit unter Berücksichtigung dieser elastischen Verformungen erfolgen. Dadurch kann die Neigung des Rades besonders präzise eingestellt werden, und die Fahrdynamik sowie der Fahrkomfort werden gegenüber dem Stand der Technik verbessert.

Das Einstellen der Neigung des Rades umfasst bevorzugt, dass der Spurwinkel und/oder der Sturzwinkel des Rades eingestellt wird/werden. Die Vorteile der Erfindung kommen dann vollständig zum Tragen, wenn sowohl der Spurwinkel als auch der Sturzwinkel des Rades abhängig von der zumindest einen Messgröße eingestellt werden.

Wie eingangs bereits ausgeführt, werden der Spurwinkel sowie der Sturzwinkel des Rades auch durch einen Einfederweg des Rades bezüglich einer Karosserie des Kraftwagens beeinflusst. Um das Einstellen der Neigung des Rades auch abhängig von dem Einfederweg zu ermöglichen, wird bei dem Verfahren bevorzugt der Einfederweg des Rades bezüglich der Karosserie mithilfe eines Höhenstandssensors gemessen. Dann wird die Neigung des Rades um die wenigstens eine Achse sowohl abhängig von der zumindest einen Kraft und/oder dem zumindest einen Drehmoment als auch abhängig von dem gemessenen Einfederweg eingestellt. Es ist somit eine besonders präzise Verstellung des Spurwinkels und des Sturzwinkels möglich.

Das Messen der Kraft und/der des Drehmoments kann auf eine solche Art und Weise erfolgen, wie sie in der Druckschrift DE 44 42 355 A1 oder in der DE 10 2005 059 393 A1 dargestellt ist.

Es wird insbesondere in allen Richtungen eines zum Rad und/oder zur Welle definierten Koordinatensystems, insbesondere eines kartesischen Koordinatensystems, die jeweils auf das Rad und/oder die Welle wirkende Kraft gemessen. Alternativ oder zusätzlich wird jeweils das bezüglich einer dieser Achsen für alle drei Achsen dieses Koordinatensystems definierte Drehmoment gemessen. Im Idealfall stehen somit drei Kräfte sowie drei Drehmomente als Messgrößen für das Einstellen der Neigung des Rades zur Verfügung; dann kann die Neigung des Rades noch besser als bei Messung nur einer Kraft und/oder eines Drehmoments an die jeweils herrschenden Fahrbedingungen angepasst werden.

Bei dem Verfahren wird bevorzugt ein Zusammenhang einer Ist-Neigung des Rades um die wenigstens eine Achse zu der wenigstens einen Messgröße modelliert. Berücksichtigt wird bei dieser Modellierung eine elastische Verformung wenigstens eines Bauteils, mit und/oder an welchem das Rad gekoppelt ist. Es sind bei dieser Modellierung zwei Wege vorgesehen: Der Zusammenhang kann durch eine mathematische Gleichung modelliert werden und/oder er kann durch eine Kennlinie, insbesondere ein Kennfeld, modelliert werden. Werden insgesamt - wie oben ausgeführt - drei Kräfte sowie drei Drehmomente gemessen, so ergibt sich bei der Modellierung des Zusammenhanges insgesamt ein sechsdimensionales Kennfeld. Aus diesem Kennfeld kann dann die sich aufgrund der elastischen Verformung des Bauteils einstellende Ist-Neigung des Rades abhängig von den herrschenden Kräften und Drehmomenten als Größe abgeleitet werden, und die Neigung des Rades kann auf der Grundlage dieser abgeleiteten Größe "Ist-Neigung" eingestellt werden.

Für das Ableiten der Größe "-Ist-Neigung" ist somit wenigstens ein zweidimensionales Kennfeld - bestehend aus der zumindest einen Messgröße und dem Einfederweg - gegeben. Werden jedoch - wie oben dargestellt - drei Kräfte sowie drei Drehmomente gemessen, so steht mit dem zusätzlich gemessenen Einfederweg insgesamt ein siebendimensionales Kennfeld für das Ableiten der Größe "ist-Neigung" zur Verfügung. Mit einem siebendimensionalen Kennfeld erhöht sich die Exaktheit der Verstellung der Neigung des Rades im Vergleich zu anderen Ausführungsformen wesentlich.

Die Neigung des Rades um die wenigstens eine Achse wird insbesondere abhängig von einem Soll-Wert eingestellt. Also wird ein Soll-Wert für das Einstellen der Neigung des Rades vorgegeben. Dieser Soll-Wert kann beispielsweise mithilfe eines mathematischen Modells und/oder mithilfe eines Kennfelds bestimmt werden. Zur Bestimmung des Soll-Werts für die Neigung können außerdem mehrere Fahrzeugparameter, wie insbesondere eine Gierrate, eine Längsbeschleunigung des Fahrzeugs, sowie eine Querbeschleunigung verwendet werden. Zusätzlich kann die Bestimmung des Soll-Werts abhängig von der wenigstens einen Messgröße erfolgen.

Darüber hinaus wird erfindungsgemäß eine Vorrichtung zum Einstellen der Neigung eines Rades eines Kraftwagens um wenigstens eine Achse bereit-gestellt. Die Vorrichtung umfasst zumindest eine Messeinrichtung zum Messen zumindest einer auf das Rad und/oder von dem Rad auf eine Welle wirkenden Kraft und/oder zum Messen zumindest eines auf das Rad und/oder die Welle wirkenden Drehmoments als zumindest eine Messgröße. Sie umfast außerdem einen mit der Messeinrichtung gekoppelte Recheneinrichtung sowie eine mit der Recheneinrichtung gekoppelte Einstellvorrichtung. Die Recheneinrichtung ist dazu ausgelegt, in Abhängigkeit von jeder Messgröße Steuerbefehle an die Einstellvorrichtung abzugeben.

Insbesondere ist eine weitere Messeinrichtung vorgesehen, welche zum Messen eines Einfederwegs des Rades bezüglich einer Karosserie des Kraftwagens ausgebildet ist. Dann kann die Recheneinrichtung auch in Abhängigkeit von dem gemessenen Einfederweg Steuerbefehle an die Einstellvorrichtung abgeben. Es sind nun zwei Alternativen möglich: Die abhängig von dem gemessenen Einfederweg abgegebenen Steuerbefehle können dieselben Steuerbefehle sein, die abhängig von der zumindest einen Messgröße abgegeben werden. Mit anderen Worten kann die Recheneinrichtung derart konzipiert sein, dass sie einen gemeinsamen Steuerbefehl an die Einstellvorrichtung abgibt, welcher sowohl abhängig von der zumindest einen Messgröße als auch abhängig von dem gemessenen Einfederweg erzeugt wird. Alternativ können die in Abhängigkeit von dem gemessenen Einfederweg abgegebenen Steuerbefehle unabhängig von denjenigen Steuerbefehlen erzeugt werden, welche in Abhängigkeit von der zumindest einen Messgröße abgegeben werden. Bei dieser Ausführungsform erfolgt das Einstellen der Neigung des Rades in additiver Weise, das heißt zunächst wird die Neigung abhängig von der zumindest einen Messgröße und dann die Neigung abhängig von dem gemessenen Federweg eingestellt.

Zur Erfindung gehört außerdem ein Kraftwagen mit einer erfindungsgemäßen Vorrichtung.

Weitere Merkmale der Erfindung ergeben sich aus den Ansprüchen, den Figuren und der Figurenbeschreibung. Die vorstehend in der Beschreibung genannten Merkmale und Merkmalskombinationen sowie die nachfolgend in der Figurenbeschreibung genannten und/oder den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Erfindung wird nun anhand einzelner bevorzugter Ausführungsbeispiele sowie unter Bezugnahme auf die beigefügte Zeichnung näher erläutert, wobei
- Fig. 1: ein Blockschaltbild einer Vorrichtung gemäß einem ersten Ausfüh- rungsbeispiel der Erfindung veranschaulicht; und
- Fig. 2: ein Blockschaltbild einer Vorrichtung gemäß einem zweiten Aus- führungsbeispiel der Erfindung zeigt.

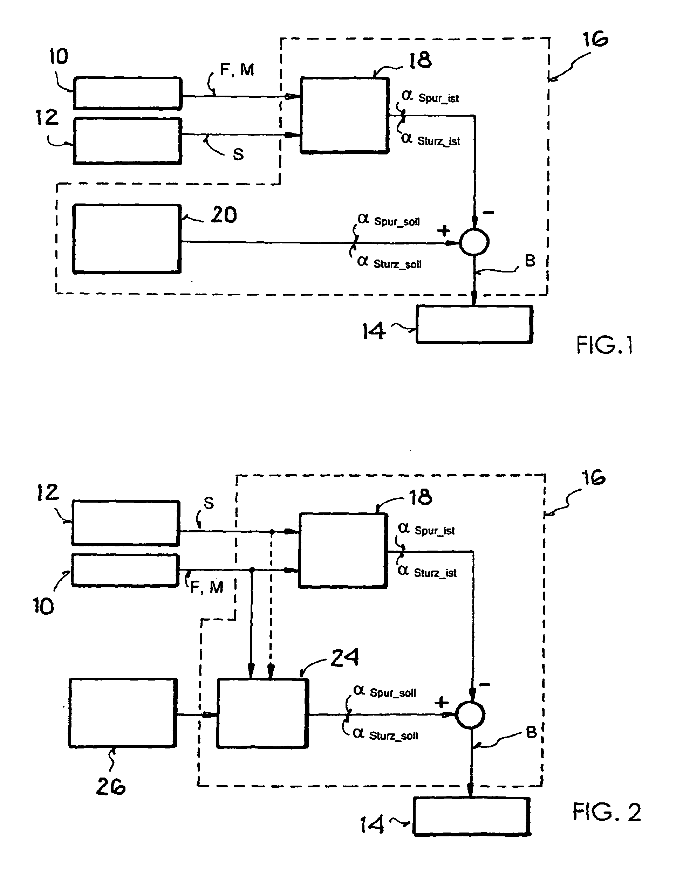

Eine in Fig. 1 anhand eines Blockschaltbildes dargestellte Vorrichtung dient zum Einstellen eines Spurwinkels sowie eines Sturzwinkels eines Rades eines Personenkraftwagens. Die Vorrichtung umfasst eine Messeinrichtung 10, welche dazu geeignet ist, Kräfte F sowie Drehmomente M, welche auf das Rad und/oder von dem Rad auf eine mit ihm gekoppelte Welle wirken, zu messen. Die Messeinrichtung 10 misst die Kräfte F beispielsweise in einem Radlager, an welchem das Rad gelagert ist - sie ist beispielsweise in dem Radlager angeordnet. Mittels der Messeinrichtung 10 können Kräfte F gemessen werden, die auf das Rad und/oder die Welle in allen drei Richtungen eines zum Rad definierten kartesischen Koordinatensystems wirken. Beispielsweise kann jeweils eine Kraft F in allen Fahrzeugrichtungen, das heißt eine Kraft in Fahrzeughochrichtung, eine Kraft in Fahrzeuglängsrichtung und eine Kraft in Fahrzeugquerrichtung, gemessen werden. Mittels der Messeinrichtung 10 können gleichfalls auf das Rad und/oder die Welle wirkende Drehmomente M bezüglich aller drei Achsen des Koordinatensystems gemessen werden.

Eine weitere Messeinrichtung der in Fig. 1 gezeigten Vorrichtung ist ein Höhenstandssensor 12. Der Höhenstandssensor 12 hat die Aufgabe, beim Einfedern des Rades dessen Einfederweg S zu messen.

Zum Einstellen des Sturzwinkels sowie des Spurwinkels ist eine Einstellvorrichtung 14 vorgesehen. Die Einstellvorrichtung 14 kann einen oder mehrere Aktoren umfassen, die zum Neigen des Rades dienen.

Die Vorrichtung umfasst außerdem eine Recheneinrichtung 16, mittels welcher das Einstellen des Spurwinkels und des Sturzwinkels gesteuert oder geregelt wird. An die Recheneinrichtung 16 werden die Messwerte für die Kräfte F, die Drehmomente M und den Einfederweg S übermittelt. Abhängig von den Kräften F, den Drehmomenten M sowie abhängig von dem Einfederweg S erzeugt die Recheneinrichtung 16 Steuerbefehle B, die an die Einstellvorrichtung 14 abgegeben werden. Wie in Fig. 1 schematisch angedeutet ist, werden die gemessenen Kräfte F und Drehmomente M sowie der Einfederweg S an eine erste Einheit 18 der Recheneinrichtung 16 übermittelt. Abgelegt ist in der ersten Einheit 18 eine mathematische Gleichung und/oder ein Kennfeld, durch welche und/oder welches ein Zusammenhang sowohl zwischen einem Ist-Spurwinkel α_{Spur_ist} und den gemessenen Kräften F, Drehmomenten M und dem Einfederweg S als auch ein Zusammenhang zwischen einem Ist-Sturzwinkel α_{Sturz-ist} und den gemessenen Kräften F, Drehmomenten M und dem Einfederweg S modelliert ist. Der Ist-Spurwinkel α_{Spur_ist} sowie der Ist-Sturzwinkel α_{Sturz_ist} entsprechen dabei einem Spurwinkel respektive Sturzwinkel, welche aufgrund der elastischen Verformungen von Bauteilen einer Radaufhebung, an welcher das Rad aufgehängt ist, sowie aufgrund der Einfederung des Rades verursacht sind. Der Ist-Spurwinkel α_{Spur_ist} sowie der Ist-Sturzwinkel α_{Sturz_ist} entsprechen somit einem Spurwinkel respektive Sturzwinkel, welche aufgrund sowohl der Starrkinematik als auch der Elastokinematik des Kraftwagens bewirkt sind.

Die in der Einheit 18 der Recheneinrichtung 16 abgelegte Gleichung und/oder das Kennfeld sind somit siebendimensional: Zur Ermittlung des Ist-Spurwinkels α_{Spur_ist} und des Ist-Sturzwinkels α_{Sturz_ist} stehen nämlich insgesamt sieben Messgrößen, drei Kräfte F, drei Drehmomente M sowie der Einfederweg S zur Verfügung.

Mittels der Recheneinrichtung 16 werden auch - wie es mit einer zweiten Einheit 20 schematisch dargestellt ist - ein Soll-Spurwinkel α_{Spur_soll} sowie ein Soll-Sturzwinkel α_{Sturz_soll} vorgegeben. In dem in Fig. 1 dargestellten Beispiel werden der Soll-Spurwinkel α_{Spur_soll} sowie der Soll-Sturzwinkel α_{Sturz_soll} durch eine mathematische Gleichung und/oder durch ein Kennfeld modelliert. Der Soll-Spurwinkel α_{Spur_soll} sowie der Soll-Sturzwinkel α_{Sturz_soll} werden dann - wie es in Fig. 1 mit einer Summiereinheit 22 schematisch angedeutet ist - um den ermittelten Ist-Spurwinkel α_{Spur_ist} beziehungsweise den Ist-Sturzwinkel α_{Spurz_ist} korrigiert: Es erfolgt jeweils eine Subtraktion α_{Spur_soll} -α_{Spur_ist} sowie α_{Sturz-soll} - α_{Sturz_ist}. Das jeweilige Ergebnis dieser Subtraktionen dient dann zur Bildung eines Steuerbefehls B an die Einstellvorrichtung 14.

Ein Blockschaltbild für eine Vorrichtung nach einem zweiten Beispiel ist in Fig. 2 dargestellt. Im Wesentlichen entspricht die Vorrichtung gemäß dem zweiten Beispiel der gemäß dem ersten Beispiel; lediglich werden der Soll-Spurwinkel α_{Spur_soll} und der Soll-Sturzwinkel α_{Sturz_soll} auf eine abweichende Art und Weise bestimmt: Der Soll-Spurwinkel α_{Spur_soll} sowie der Soll-Sturzwinkel α_{Sturz_soll} werden nun von einer zentralen Regeleinheit 24 des Kraftwagens vorgegeben. Diese Regeleinheit 24 dient im Kraftwagen zum Regeln des Fahrzeugverhaltens. Zum Bestimmen des Soll-Spurwinkels α_{Spur_soll} sowie des Soll-Sturzwinkels α_{Sturz_soll} werden nun die mithilfe der Messeinrichtung 10 gemessenen Kräfte F sowie Drehmomente M berücksichtigt; also erfolgt das Bestimmen des Soll-Spurwinkels α_{Spur_soll} sowie des Soll-Sturzwinkels α_{Sturz_soll} abhängig von den gemessenen Kräften F und Drehmomenten M. Wahlweise kann auch der mittels des Höhenstandssensors 12 gemessene Einfederweg S des Rades zum Bestimmen des Soll-Spurwinkels α_{Spur_soll} sowie des Soll-Sturzwinkels α_{Sturz_soll} verwendet werden.

An die Regeleinheit 24 werden außerdem Fahrzeugparameter übermittelt, wie insbesondere die jeweils gegenwärtige Gierrate, die Längsbeschleunigung sowie die Querbeschleunigung des Kraftwagens. Diese Parameter werden von Sensoren, die in Fig. 2 mit dem Bezugszeichen 26 versehen sind, an die zentrale Regeleinheit 24 abgegeben. Diese an die Regeleinheit 24 übermittelten Fahrzeugparameter werden zur Bestimmung des Soll-Spunrvinkels α_{Spur_soll} sowie des Soll-Sturzwinkels α_{Sturz_soll} verwendet. Es erfolgt somit eine kontinuierliche Festlegung des Soll-Spurwinkels α_{Spur_soll} und des Soll-Sturzwinkels α_{Sturz_soll}, und zwar abhängig von den Messgrößen.

## Patentansprüche

1. Verfahren zum Einstellen einer Neigung eines Rades eines Kraftwagens um wenigstens eine Achse mithilfe einer Einstellvorrichtung-(14), mit den Schritten:
- Messen zumindest einer Messgröße, und
- Einstellen der Neigung des Rades um die wenigstens eine Achse abhängig von der zumindest einen Messgröße (F, M, S),
**dadurch gekennzeichnet, dass**
als zumindest eine Messgröße (F, M, S) einerseits eine auf das Rad und/oder von dem Rad auf eine Welle wirkende Kraft (F) und/oder ein auf das Rad und/oder die Welle wirkendes Drehmoment (M) und andererseits ein Einfederweg (S) des Rades bzgl. einer Karosserie des Kraftwagens mithilfe eines-Höhenstandssensors (12) gemessen wird.

2. Verfahren nach Anspruch 1, wobei das Einstellen der Neigung des Rades umfasst, dass der Spurwinkel und/oder der Sturzwinkel des Rades eingestellt wird/werden.

3. Verfahren nach Anspruch 1 oder 2, wobei in allen Richtungen eines zum Rad und/oder zur Welle definierten Koordinatensystems mit drei Achsen, insbesondere eines kartesischen Koordinatensystems, die jeweils auf das Rad und/oder die Welle wirkende Kraft (F) gemessen und/oder bezüglich aller drei Achsen dieses Koordinatensystems jeweils das definierte Drehmoment (M) gemessen wird.

4. Verfahren nach einem der vorhergehenden Ansprüche, wobei ein Zusammenhang einer Ist-Neigung (α_{Spur_ist}, α_{Sturz_ist}) des Rades um die wenigstens eine Achse zu der wenigstens einen Messgröße (F, M) unter Berücksichtigung einer elastischen Verformung eines Bauteils, an und/oder mit welchem das Rad gekoppelt ist, durch zumindest eine mathematische Gleichung modelliert wird.

5. Verfahren nach einem der vorhergehenden Ansprüche, wobei ein Zusammenhang einer Ist-Neigung (α_{Spur_ist,} α_{Sturz_ist}) des Rades um die wenigstens eine Achse zu der wenigstens einen Messgröße unter Berücksichtigung einer elastischen Verformung eines Bauteils, an und/oder mit welchem das Rad gekoppelt ist, durch ein Kennfeld modelliert wird.

6. Verfahren nach einem der vorhergehenden Ansprüche, wobei die Neigung des Rades um die wenigstens eine Achse abhängig von einem Soll-Wert (α_{Spur_soll}, α_{Sturz_soll}) eingestellt wird.

7. Verfahren nach Anspruch 6, wobei der Soll-Wert (α_{Spur_soll}, α_{Sturz_soll}) der Neigung des Rades abhängig von der zumindest einen Messgröße (F, M) bestimmt wird.

8. Vorrichtung zum Einstellen einer Neigung eines Rades eines Kraftwagens um wenigstens eine Achse, mit:
zumindest einer Messeinrichtung (10) zum Messen zumindest einer Messgröße,
- einer mit der Messeinrichtung (10) gekoppelten Recheneinrichtung (16),
- einer mit der Recheneinrichtung (16) gekoppelten Einstellvorrichtung (14), wobei die Recheneinrichtung (16) dazu ausgelegt ist, in Abhängigkeit von der zumindest einen Messgröße (F, M, S) Steuerbefehle (B) an die Einstellvorrichtung (14) abzugeben,
**dadurch gekennzeichnet, dass**
das mit einer Messeinrichtung (10,12) einerseits eine auf das Rad und/oder von dem Rad auf eine Welle wirkende Kraft (F) und/oder eine auf das Rad und/oder die Welle wirkendes Drehmoment (M) und andererseits ein Einfederweg (S) des Rades bzgl. einer Karosserie messbar ist.

9. Kraftwagen mit einer Vorrichtung nach Anspruch 8.

## Claims

1. Method for adjusting an inclination of a wheel of a motor vehicle about at least one axis by means of an adjusting apparatus (14), having the steps:
- measuring at least one measurement variable, and
- adjusting the inclination of the wheel about the at least one axis as a
function of the at least one measurement variable (F, M, S),
**characterized in that**,
as at least one measurement variable (F, M, S), firstly a force (F) acting on the wheel and/or exerted by the wheel on a shaft and/or a torque (M) acting on the wheel and/or the shaft are/is measured, and secondly a deflection travel (S) of the wheel with respect to a body of the motor vehicle is measured by means of a height level sensor (12).

2. Method according to Claim 1, the adjustment of the inclination of the wheel comprising the adjustment of the toe angle and/or of the camber angle of the wheel.

3. Method according to Claim 1 or 2, wherein the force (F) acting in each case on the wheel and/or the shaft is measured in all directions of a three-axis coordinate system, in particular Cartesian coordinate system, defined with respect to the wheel and/or with respect to the shaft, and/or, with respect to all three axes of said coordinate system, the defined torque (M) is measured in each case.

4. Method according to one of the preceding claims, wherein a relationship between an actual inclination (αₜₒₑ__{actual}, α_{camber_actual}) of the wheel about the at least one axis to the at least one measurement variable (F, M) is modelled by means of at least one mathematical equation taking into consideration an elastic deformation of a component to which the wheel is coupled.

5. Method according to one of the preceding claims, wherein a relationship between an actual inclination (αₜₒₑ__{actual}, α_{camber_actual}) of the wheel about the at least one axis to the at least one measurement variable is modelled by means of a characteristic map taking into consideration an elastic deformation of a component to which the wheel is coupled.

6. Method according to one of the preceding claims, the inclination of the wheel about the at least one axis being adjusted as a function of a setpoint value (αt_{oe_setpoint,} α_{camber_setpoint}).

7. Method according to Claim 6, the setpoint value (α_{toe_setpoint,} α_{camber_ setpoint}) of the inclination of the wheel being determined as a function of the at least one measurement variable (F, M).

8. Apparatus for adjusting an inclination of a wheel of a motor vehicle about at least one axis, having:
- at least one measurement device (10) for measuring at least one measurement variable,
- a processor device (16) coupled to the measurement device (10),
- an adjusting apparatus (14) coupled to the processor device (16), the processor device (16) being designed to output control commands (B) to the adjusting apparatus (14) as a function of the at least one measurement variable (F, M, S),
**characterized in that**
firstly a force (F) acting on the wheel and/or exerted by the wheel on a shaft and/or a torque (M) acting on the wheel and/or on the shaft, and secondly a deflection travel (S) of the wheel with respect to a body, can be measured by means of a measurement device (10, 12).

9. Motor vehicle having an apparatus according to Claim 8.

## Revendications

1. Procédé d'ajustement de l'inclinaison d'une roue d'un véhicule automobile autour d'au moins un axe au moyen d'un dispositif d'ajustement (14), comprenant les étapes suivantes :
- mesurer au moins une grandeur de mesure, et
- ajuster l'inclinaison de la roue autour de l'au moins un axe en fonction de l'au moins une grandeur de mesure (F, M, S),
**caractérisé en ce que**
l'on mesure, en tant qu'au moins une grandeur de mesure (F, M, S) d'une part une force (F) agissant sur la roue et/ou de la roue sur un arbre, et/ou un couple (M) agissant sur la roue et/ou sur l'arbre, et d'autre part une course de suspension (S) de la roue par rapport à une carrosserie du véhicule automobile à l'aide d'un capteur de hauteur (12).

2. Procédé selon la revendication 1, dans lequel l'ajustement de l'inclinaison de la roue inclut l'ajustement de l'angle de pincement et/ou de l'angle de carrossage de la roue.

3. Procédé selon la revendication 1 ou 2, dans lequel, dans toutes les directions d'un système de coordonnées à trois axes défini par rapport à la roue et/ou à l'arbre, en particulier d'un système de coordonnées cartésiennes, la force (F) agissant à chaque fois sur la roue et/ou sur l'arbre et/ou le couple (M) défini respectivement par rapport aux trois axes de ce système de coordonnées sont mesurés.

4. Procédé selon l'une quelconque des revendications précédentes, dans lequel une relation d'une inclinaison instantanée (α_{Spur_ist}, α_{Sturz_ist}) de la roue autour de l'au moins un axe avec l'au moins une grandeur de mesure (F, M) est modélisée par au moins une équation mathématique en tenant compte d'une déformation élastique d'un composant sur lequel et/ou avec lequel la roue est accouplée.

5. Procédé selon l'une quelconque des revendications précédentes, dans lequel une relation d'une inclinaison instantanée (α_{Spur_ist}, α_{Sturz_ist}) de la roue autour de l'au moins un axe avec l'au moins une grandeur de mesure est modélisée par un champ caractéristique en tenant compte d'une déformation élastique d'un composant sur lequel et/ou avec lequel la roue est accouplée.

6. Procédé selon l'une quelconque des revendications précédentes, dans lequel l'inclinaison de la roue autour de l'au moins un axe est ajustée en fonction d'une valeur de consigne (α_{Spur_soll}, α_{Sturz_soll}).

7. Procédé selon la revendication 6, dans lequel la valeur de consigne (α_{Spur_soll}, α_{Sturz_soll}) de l'inclinaison de la roue est déterminée en fonction de l'au moins une grandeur de mesure (F, M).

8. Dispositif pour ajuster l'inclinaison d'une roue d'un véhicule automobile autour d'au moins un axe, comprenant :
- au moins un dispositif de mesure (10) pour mesurer au moins une grandeur de mesure,
- un ordinateur (16) couplé au dispositif de mesure (10),
- un dispositif d'ajustement (14) couplé à l'ordinateur (16), l'ordinateur (16) étant conçu pour fournir, en fonction de l'au moins une grandeur de mesure (F, M, S), des ordres de commande (B) au dispositif d'ajustement (14),
**caractérisé en ce que**
l'on peut mesurer, avec un dispositif de mesure (10, 12), d'une part une force (F) agissant sur la roue et/ou de la roue sur un arbre, et/ou un couple (M) agissant sur la roue et/ou sur l'arbre, et d'autre part une course de suspension (S) de la roue par rapport à une carrosserie.

9. Véhicule automobile comprenant un dispositif selon la revendication 8.
